# EUROPEAN PATENT APPLICATION

(11) **EP 0 851 351 A2**
(43) Date of publication of application: **01.07.1998**
(21) Application number: 97250384.1
(22) Date of filing: 24.12.1997
(51) Int. Cl.: G06F 11/00

(54) **Emulation system and method for microcomputer**

(30) Priority: 27.12.1996 JP 350021/96
(71) Applicant: NEC CORPORATION, Tokyo (JP)
(72) Inventor: Katsuta, Hiroshi, Minato-ku, Tokyo (JP)
(74) Representative: Patentanwälte Wenzel & Kalkoff

(57) **Abstract**

An emulation system for a microcomputer is provided, which is able to readily cope with change of a clock signal frequency. This emulation system is comprised of a CPU section located on a CPU chip and a peripheral section located on a peripheral chip. The CPU section includes an evaluation CPU. The peripheral section includes peripherals and a clock generator for generating a basic clock signal with a basic frequency. A first clock signal for the evaluation CPU and a second clock signal for the peripherals are generated by using the basic clock signal. Even if the first clock signal for the evaluation CPU is changed, this system is able to cope with this change by changing the frequency of the basic clock signal. This change of the frequency may be readily implemented by multiplying or dividing the frequency of the basic clock signal.

## Description

### BACKGROUND OF THE INVENTION

### 1. Field of the Invention

The present invention relates to emulation of a microcomputer performance and more particularly, to an emulation system and an emulation method for a microcomputer, which is typically used on debugging programs designed for a microcomputer.

### 2. Description of the Prior Art

Microcomputers are often used for electronic control of various external devices. Microcomputers operate according to control programs designed for controlling specific external devices. On debugging these programs, emulation systems or emulators are usually used.

An emulation system or emulator of this sort is capable of microcomputer functions equivalent to those of a "target microcomputer" to be emulated and evaluation functions for evaluating whether a "target external device" to be controlled by the target microcomputer is correctly controlled or operated according to a specific control program or not. The evaluation functions typically include start and break of execution of the control program, verification and change of after-break status of registers and/or Input/Output (I/O) ports, and tracing of execution of the control program.

On operation of the emulation system of this sort, the target external device is electrically connected to the emulation system in such a way that the target external device is operated by the microcomputer functions of the emulation system. At the same time, an external controller such as a computer, which is operated by a human operator, is electrically connected to the emulation system for the purpose of emulation using the evaluation functions of the emulation system. Then, the control program to be debugged is executed using the built-in microcomputer functions on the emulation system. During the execution of the control program, the human operator inspects the information relating to the execution status or results of the control program and/or corrects program errors found through this inspection as necessary using the built-in evaluation functions through the external controller. Thus, bugs included in the program may be fixed or removed.

Typically, a microcomputer has a configuration divided into a central processing unit (CPU) section and a peripheral section. The peripheral section operates to control the target external device under the control of the CPU section. The CPU section typically includes a CPU and its neighboring subsystems such as an interface (I/F) for electrically connecting the external controller, a clock generator for generating a clock signal, and a buffer for the clock signal. The peripheral section typically includes peripheral controllers for controlling the peripheral section, I/O ports, a counter, a timer, a frequency divider for frequency-dividing the clock signal transmitted from the clock generator in the CPU section, and a buffer for the clock signal.

A conventional emulation system of this sort usually has a similar configuration to the microcomputer corresponding to the above microcomputer configuration. Specifically, the conventional emulation system has a configuration divided into a CPU section and a peripheral section. The peripheral section operates to control the target external device under the control of the CPU section. The CPU section typically includes an evaluation CPU and its neighboring subsystems such as an I/F for electrically connecting the external controller, a clock generator for generating a clock signal, and a buffer for the clock signal. The peripheral section typically includes peripheral controllers for controlling the peripheral section, I/O ports, a counter, a timer, a frequency divider for frequency-dividing the clock signal transmitted from the clock generator in the CPU section, and a buffer for the clock signal.

Further, the above CPU and peripheral sections of the conventional emulation system are implemented on two separate semiconductor chips, respectively; which are respectively termed a "CPU chip" and a "peripheral chip", here. These two separate chips will produce an advantage that the CPU chip may be commonly used for various target external devices if the design of the peripheral chip alone is changed according to the required performance. This advantage is caused by the following reason.

Specifically, in development of microcomputer application systems, it is usual that only the peripherals of a microcomputer are changed in design according to the required performance while the CPU of a microcomputer is commonly used for various target external devices.

With the conventional emulation system for a microcomputer, as described above, the clock signal is generated by the clock generator located on the CPU chip, and the clock signal thus generated is transferred to the peripheral chip through the buses. Then, the clock signal is frequency-divided by the frequency divider on the peripheral chip, and is supplied to the peripherals equipped on the peripheral chip. Therefore, the following problem will occur.

In recent years, the clock signal frequency of a CPU in a microcomputer has been becoming higher and higher. It has not been rare that the clock signal frequency is multiplied by a factor of ten in several years. Also, improvement of a microcomputer is often made on the clock signal increase in the CPU alone. On the other hand, unlike the clock signal frequency for the CPU, the clock signal frequency for the peripherals has been scarcely changed.

However, the above-described conventional emulation system has the clock generator on the CPU chip. Therefore, the design of the CPU chip needs to be changed according to the change of the clock signal frequency therefor. This means that not only the CPU chip but also the peripheral chip are necessarily replaced to cope with the change of the clock signal frequency. This leads to increase in design difficulty of an emulation system and in fabrication cost thereof.

The Japanese Non-Examined Patent Publication No. 2-82377, which was published in March 1990, discloses a semiconductor integrated circuit serving as an emulation system of this sort. In this integrated circuit, two peripheral chips for different operation modes are provided in advance and they are selectively activated by a mode selection signal.

However, this conventional integrated circuit does not solve the above problem relating to change of the clock signal frequency.

### SUMMARY OF THE INVENTION

Accordingly, an object of the present invention is to provide an emulation system and an emulation method for a microcomputer that can readily cope with change of a clock signal frequency.

Another object of the present invention is to provide an emulation system and an emulation method for a microcomputer that can cope with change of a clock signal frequency while keeping the configuration of a CPU chip having complex evaluation functions unchanged.

The above objects together with others not specifically mentioned will become clear to those skilled in the art from the following description.

According to a first aspect of the present invention, an emulation system for a microcomputer is provided, which is comprised of a CPU section located on a CPU chip and a peripheral section located on a peripheral chip.

The CPU section includes an evaluation CPU.

The peripheral section includes peripherals and a clock generator for generating a basic clock signal with a basic frequency.

A first clock signal for the evaluation CPU and a second clock signal for the peripherals are generated by using the basic clock signal.

With the emulation system for a microcomputer according to the first aspect of the present invention, the peripheral section includes the clock generator for generating the basic clock signal. The first clock signal for the evaluation CPU is generated by using the basic clock signal, and the second clock signal is generated by using the basic clock signal.

Therefore, even if the first clock signal for the evaluation CPU is changed, this system is able to cope with this change by changing the frequency of the basic clock signal. This change of the frequency may be readily implemented by multiplying or dividing the frequency of the basic clock signal.

Also, if the peripheral chip is replaced with another peripheral chip whose clock generator generates a different frequency according to the frequency change of the first clock signal, this system is able to cope with the frequency change of the first clock signal while keeping the configuration of the CPU chip having complex evaluation functions unchanged.

In a preferred embodiment of the system according to the first aspect, a frequency divider is additionally provided on the peripheral chip. The basic frequency of the basic clock signal is set to be equal to a frequency of the first clock signal for the evaluation CPU. The second clock signal is set to be a divided frequency of the basic frequency. The divided frequency is given by dividing the basic frequency of the basic clock signal using the frequency divider.

In another preferred embodiment of the system according to the first aspect, a frequency multiplier is additionally provided on the peripheral chip. The basic frequency of the basic clock signal is set to be equal to a frequency of the second clock signal for the peripherals. The first clock signal is set to be a multiplied frequency of the basic frequency. The multiplied frequency is given by multiplying the basic frequency of the basic clock signal using the frequency multiplier.

According to a second aspect of the present invention, an emulation method for a microcomputer is provided, which is comprised of the following steps (a) to (c).
(a) A basic clock signal with a basic frequency is generated in a peripheral section located on a peripheral chip.
(b) A first clock signal for an evaluation CPU is generated on the peripheral chip using the basic clock signal. The evaluation CPU is provided in a CPU section which is located on a CPU chip.
(c) A second clock signal for peripherals is generated on the peripheral chip using the basic clock signal. The peripherals are provided in a peripheral section which is located on the peripheral chip.

with the emulation method for a microcomputer according to the second aspect of the present invention, because of substantially the same reason as that in the emulation system according to the first aspect, there are the same advantages as those in the system according to the first aspect.

In a preferred embodiment of the method according to the second aspect, the basic frequency of the basic clock signal is set to be equal to a frequency of the first clock signal for the evaluation CPU. The second clock signal is generated by dividing the basic frequency of the basic clock signal using a frequency divider located on the peripheral chip.

In another preferred embodiment of the method according to the second aspect, the basic frequency of the basic clock signal is set to be equal to a frequency of the second clock signal for the peripherals. The first clock signal is generated by multiplying the basic frequency of the basic clock signal using a frequency multiplier located on the peripheral chip.

### BRIEF DESCRIPTION OF THE DRAWINGS

In order that the present invention may be readily carried into effect, it will now be described with reference to the accompanying drawings.

Fig. 1 is a functional block diagram showing an emulation system for a microcomputer according to a first embodiment of the present invention.

Fig. 2 is a functional block diagram showing an emulation system for a microcomputer according to a second embodiment of the present invention.

### DETAILED DESCRIPTION OF THE PREFERRED EMBODIMENTS

Preferred embodiments of the present invention will be described below referring to the drawings attached.

### FIRST EMBODIMENT

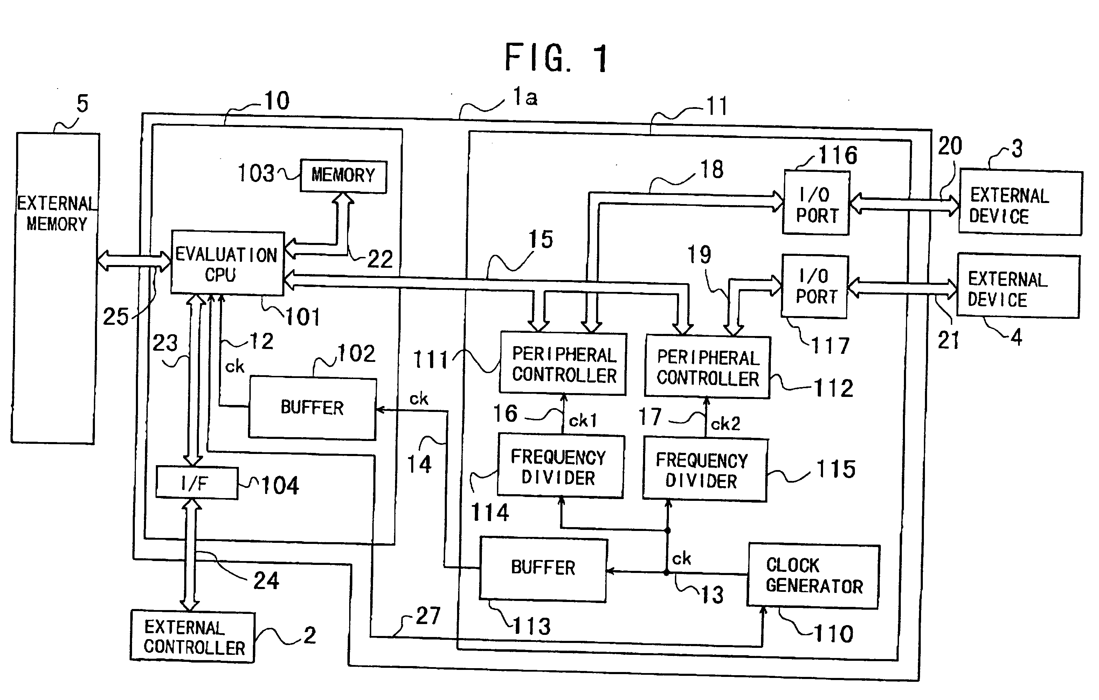

As shown in Fig. 1, an emulation system la for a microcomputer according to a first embodiment of the present invention includes a CPU section located on a CPU chip 10 and a peripheral section located on a peripheral chip 11.

The CPU section includes an evaluation CPU 101, a buffer 102, an internal memory device 103, and an I/F 104.

The evaluation CPU 101 realizes (i) microcomputer functions equivalent to a specific target microcomputer (not shown) and (ii) specific evaluation functions for evaluating a control program which is designed for this target microcomputer and a specific external device to be controlled by this target microcomputer. These functions are performed according to a specific emulation program.

The internal memory device 103 serves to store the emulation program, i.e., various emulation instructions and various emulation data. The internal memory device 103 is electrically connected to the CPU 101 through a bus 22.

An external memory device 5, which serves to store a control program to be debugged and is located outside the emulation system la, is electrically connected to the CPU 101 through a bus 25. The external memory device 5 further serves to store data generated in the emulation processes. The external memory device 5 typically includes an emulation memory section, a monitoring memory section, a tag event memory section, and so on.

The buffer 102 serves to buffer the waveform of a clock signal ck supplied from the peripheral chip 11 through a signal line 14 and to arrange or adjust the waveform of the clock signal ck. Then, the buffer 102 supplies the clock signal ck to the CPU 101 through a signal line 12. The CPU operates according to the clock signal ck thus supplied.

The I/F 104 serves to electrically connect an external controller 2 to the CPU section through a bus 24 on operation. The external controller 2, which is used to control the emulation system 1, is operated by a human operator.

The peripheral section includes a clock generator 110, first and second peripheral controllers 111 and 112, a buffer 113, first and second frequency dividers 114 and 115, and first and second I/o ports 116 and 117. The first and second peripheral controllers 111 and 112 and the first and second I/O ports 116 and 117 constitute a part of peripherals provided in the peripheral section. The peripherals serve to translate the instructions and data transmitted from the CPU 101 to the information understandable to the first and second external devices 3 and 4 such as sensors and actuators. The peripherals have specific peripheral functions equivalent to the peripherals of the target microcomputer.

The first peripheral controller 111 is electrically connected to the evaluation CPU 101 on the CPU chip lo through a bus 15. Further, the first peripheral controller 111 is electrically connected to the first I/O port 116 through a bus 18. The first I/O port 116 is electrically connected to the first external device 3 through a bus 20. The first external device 3 is controlled by the built-in microcomputer functions of the emulation system la according to the control program.

The second peripheral controller 112 is electrically connected to the evaluation CPU 101 on the CPU chip 10 through the bus 15. Further, the second peripheral controller 112 is electrically connected to the second I/o port 117 through a bus 19. The second I/O port 117 is electrically connected to the second external device 4 through a bus 21. The second external device 4 is controlled by the built-in microcomputer functions of the emulation system la according to the control program.

The clock generator 110 generates the clock signal ck, which has a specific frequency such as approximately 100 MHz. The frequency of the clock signal ck is equal to a clock signal for the evaluation CPU 101 on the CPU chip 10. The clock signal ck thus generated is then supplied to the buffer 113 and the first and second frequency dividers 114 and 115 through signal lines 13, respectively.

The buffer 113 serves to buffer the clock signal ck thus received and to amplify the signal ck. Then, the buffer 113 supplies the clock signal ck to the buffer 102 through the signal line 14.

The first frequency divider 114 divides the frequency of the clock signal ck by a specific value, generating a first clock signal ck1 for a part of the peripherals. The clock signal ckl thus generated is supplied to the first peripheral controller 111 through a signal line 16. The first peripheral controller 111 controls the corresponding part of the peripherals on the peripheral chip 11 according to the first clock signal ckl.

The second frequency divider 115 divides the frequency of the clock signal ck by a specific value, generating a second clock signal ck2 for another part of the peripherals. The clock signal ck2 thus generated is supplied to the second peripheral controller 112 through a signal line 17. The second peripheral controller 112 controls the corresponding part of the peripherals on the peripheral chip 11 according to the second clock signal ck2.

The clock signal ck generated by the clock generator 110 is transferred from the buffer 113 on the peripheral chip 11 to the buffer 102 on the CPU chip 10 through the signal line 14. The clock signal ck is then supplied to the evaluation CPU 101 through the signal line 12. The CPU 101 executes the control program according to the clock signal ck thus supplied.

The reference numeral 27 denotes a signal line for transferring a "clock control signal" for instructing the start and stop of supply of the clock signal ck to the CPU 101. The signal line 27 is provided because the clock signal ck is supplied from the peripheral chip 11 to the CPU chip 10, and therefore, the CPU 101 is unable to notice the supply and stop of the signal ck in the first embodiment unless the clock control signal is supplied.

As the signal line 27 for the clock control signal, any one of the popular control signal lines for electrically interconnecting the CPU and peripheral chips 10 and 11 may be used. For example, a stand-by signal line for instructing the stand-by of operation from the CPU chip 10 to the peripheral chip 11 is preferably used. In this case, no additional signal line needs to be provided for transferring the clock control signal.

Next, the operation of the emulation system la according to the first embodiment is explained below.

First, the control program to be debugged is loaded in the external memory device 5 equipped outside the emulation system la. The emulation program is loaded in the internal memory device 103 equipped inside the emulation system la. The external controller 2 is electrically connected to the CPU chip 10 through the I/F 104. The first and second external devices 3 and 4 to be controlled are electrically connected to the peripheral chip 11 through the first and second I/O ports 20 and 21, respectively.

Next, the emulation system la is started to operate according to the control program by the human operator through the external controller 2, thereby driving the first and second external devices 3 and 4 under the control of the evaluation CPU 101.

Specifically, the evaluation CPU 101 reads out the instructions and data from the control program stored in the external memory 5 through the bus 25, controlling the peripherals on the peripheral chip 11 according to the instructions thus read out. The first and second peripheral controllers 111 and 112 control or drive the first and second external devices 3 and 4 through the buses 18 and 19, the I/O ports 116 and 117, and the buses 20 and 21, respectively.

On the other hand, the evaluation CPU 101 reads out emulation instructions and data from the emulation program stored in the internal memory device 103 through the bus 22. The CPU 101 executes the emulation instructions thus read out to debug the control program.

The results of the debugging are stored in the external memory 5, as necessary.

The above control and emulation operations of the system la are the same as those in the above-described conventional one.

During execution of the control and emulation operations of the emulation system 1a, the CPU 101 performs its behaviors synchronized with the clock signal ck thus supplied.

With the emulation system 1a for a microcomputer according to the first embodiment, as described above, the peripheral chip 11 includes the clock generator 110 for generating the clock signal ck for the evaluation CPU 101. The first and second clock signals ck1 and ck2 for the peripherals are generated by frequency-dividing the clock signal ck using the first and second frequency dividers 114 and 115.

Therefore, even if the clock signal ck for the evaluation CPU 101 is changed, this emulation system la is able to cope with this change by simply changing the frequency of the clock signal ck. This frequency change may be readily implemented by changing the output frequency of the clock generator 110.

Also, even if the peripheral chip 11 is replaced with another one whose clock generator generates a different frequency according to the frequency change of the clock signal ck, this emulation system la is able to cope with the frequency change while keeping the configuration of the CPU chip 10 having complex evaluation functions unchanged.

The system la according to the first embodiment has an additional advantage that the two clock signals ckl and ck2 may have different frequencies corresponding to the operating frequencies for the first and second external devices 3 and 4.

### SECOND EMBODIMENT

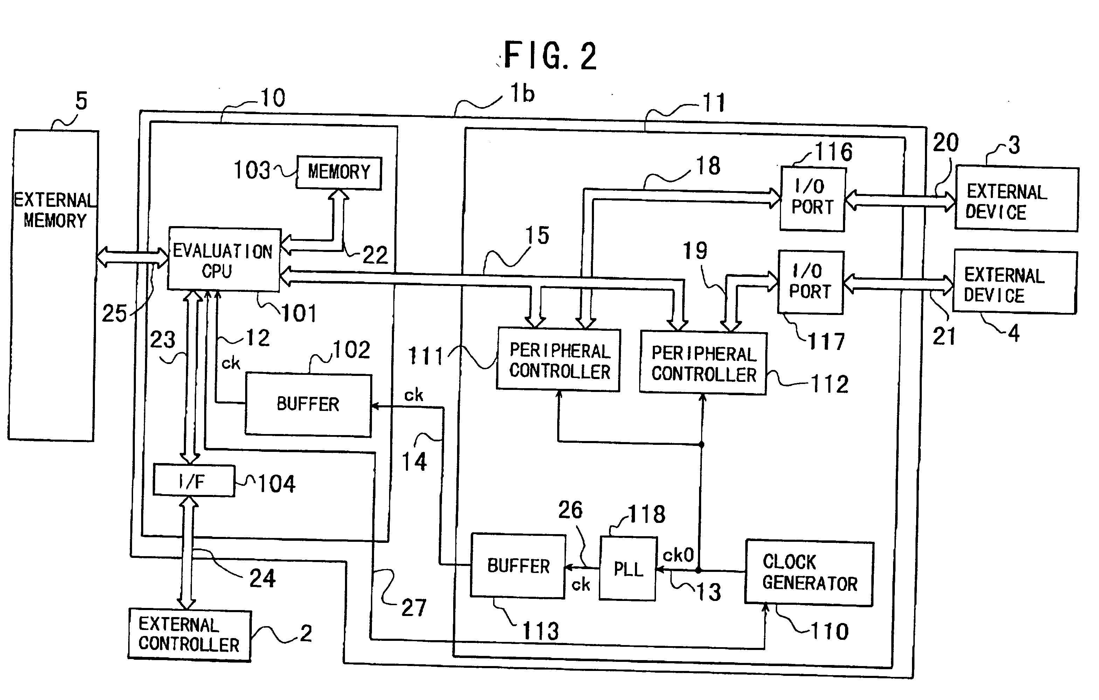

Fig. 2 shows an emulation system 1b for a microcomputer according to a second embodiment of the invention.

This system 1b has the same configuration as that of the system la according to the first embodiment, except that a phase-locked loop (PLL) circuit 118 serving as a frequency multiplier is provided instead of the first and second frequency dividers 114 and 115. Therefore, the explanation about the same configuration is omitted here for the sake of simplification by attaching the same reference numerals to the same or corresponding elements in Fig. 2.

In this system 1b, unlike the system la according to the first embodiment, the clock generator 110 generates a clock signal ck0 with a frequency equal to that of the first and second clock signals ck1 and ck2 for the first and second external devices 3 and 4. The clock signal ck0 thus generated is directly supplied to the first and second peripheral controllers 111 and 112 through the signal lines 13.

On the other hand, the clock signal ck0 is supplied to the PLL circuit 118. The PLL circuit 118 multiplies the frequency of the clock signal ck0, thereby generating the clock signal ck with the frequency for the CPU 101. The clock signal ck is then supplied to the evaluation CPU 101 in the same way as that in the first embodiment.

It is obvious that the emulation system 1b for a microcomputer according to the second embodiment has the same advantages as those in the first embodiment.

The system 1b according to the second embodiment has an additional advantage that the configuration of the peripheral section is simplified compared with the system la according to the first embodiment.

While the preferred forms of the present invention has been described, it is to be understood that modifications will be apparent to those skilled in the art without departing from the spirit of the invention. The scope of the invention, therefore, is to be determined solely by the following claims.

## Claims

1. An emulation system for a microcomputer, comprising:
a CPU section located on a CPU chip;
a peripheral section located on a peripheral chip;
said CPU section including an evaluation CPU; and
said peripheral section including peripherals and a clock generator for generating a basic clock signal with a basic frequency;
wherein a first clock signal for said evaluation CPU and a second clock signal for said peripherals are generated by using said basic clock signal.

2. A system as claimed in claim 1, further comprising a frequency divider provided on said peripheral chip;
wherein said basic frequency of said basic clock signal is set to be equal to a frequency of said first clock signal for said evaluation CPU;
and wherein said second clock signal is set to be a divided frequency of said basic frequency;
and wherein said divided frequency is given by dividing said basic frequency of said basic clock signal using said frequency divider.

3. A system as claimed in claim 1, further comprising a frequency multiplier provided on said peripheral chip;
wherein said basic frequency of said basic clock signal is set to be equal to a frequency of said second clock signal for said peripherals;
and wherein said first clock signal is set to be a multiplied frequency of said basic frequency;
and wherein said multiplied frequency is given by multiplying said basic frequency of said basic clock signal using said frequency multiplier.

4. A system as claimed in claim 1, further comprising a clock control line for transferring a clock control signal to start and stop of supply of said clock signal to said CPU;
and wherein said clock control line electrically connects said CPU and said clock generator.

5. A system as claimed in claim 4, wherein said clock control line is formed by a stand-by signal line for transferring a stand-by signal from said CPU section to said peripheral section.

6. A system as claimed in claim 1, further comprising a memory for storing an emulation program located in said CPU section.

7. An emulation method for a microcomputer, comprising the steps of:
(a) generating a basic clock signal with a basic frequency in a peripheral section located on a peripheral chip;
(b) generating a first clock signal for an evaluation CPU on said peripheral chip using said basic clock signal;
said evaluation CPU being provided in a CPU section located on a CPU chip;
(c) generating a second clock signal for peripherals on said peripheral chip using said basic clock signal;
said peripherals being provided in a peripheral section located on said peripheral chip.

8. A method as claimed in claim 7, wherein said basic frequency of said basic clock signal is set to be equal to a frequency of said first clock signal for said evaluation CPU;
and wherein said second clock signal is generated by dividing said basic frequency of said basic clock signal using a frequency divider located on said peripheral chip.

9. A method as claimed in claim 7, wherein said basic frequency of said basic clock signal is set to be equal to a frequency of said second clock signal for said peripherals;
and wherein said first clock signal is generated by multiplying said basic frequency of said basic clock signal using a frequency multiplier located on said peripheral chip.

10. A method as claimed in claim 7, wherein a clock control signal is transferred between said CPU and said clock generator through a clock control line to start and stop of supply of said clock signal to the CPU.

11. A method as claimed in claim 10, wherein a stand-by signal line for transferring a stand-by signal from said CPU section to said peripheral section is used as said clock control line.

12. A method as claimed in claim 7, wherein emulation is performed using an emulation program stored in a memory which is located in said CPU section.
